# EUROPEAN PATENT SPECIFICATION

(11) **EP 4 595 413 B1**
(45) Date of publication and mention of the grant of the patent: **09.09.2026**
(21) Application number: 23769295.9
(22) Date of filing: 19.09.2023
(51) Int. Cl.: H04L 67/10, H04L 67/1008, H04L 67/101, H04L 67/1031, H04L 67/1036, H04L 67/563

(54) **A METHOD FOR SELECTING A SUBSTITUTE PROXY IN A WIRELESS COMMUNICATION NETWORK**
VERFAHREN ZUR AUSWAHL EINES ERSATZ-PROXYS IN EINEM DRAHTLOSEN KOMMUNIKATIONSNETZ
PROCÉDÉ DE SÉLECTION D'UN MANDATAIRE DE SUBSTITUTION DANS UN RÉSEAU DE COMMUNICATION SANS FIL

(30) Priority: 26.09.2022 EP 22197740
(43) Date of publication of application: 06.08.2025
(73) Proprietor: Signify Holding B.V., 5656 AE Eindhoven (NL)
(72) Inventor: MEKENKAMP, Gerhardus, Engbertus, 5656 AE Eindhoven (NL); HAVERLAG, Marco, 5656 AE Eindhoven (NL); ERDMANN, Bozena, 5656 AE Eindhoven (NL)
(74) Representative: Verweij, Petronella Daniëlle
(86) International application number: PCT/EP2023/075803
(87) International publication number: WO 2024/068364

(56) References cited:
- US-A1- 2006 274 671
- US-A1- 2016 212 010

## Description

### FIELD OF THE INVENTION

The invention relates to the field of wireless communication. More particularly, various methods, apparatus, and systems are disclosed herein related to a method of a node for selecting a substitute proxy to replace its present proxy for accessing a wireless communication network.

### BACKGROUND OF THE INVENTION

There is an ongoing trend in the professional lighting market to move more and more towards connected lighting systems, which enable all kinds of new features like (remote) scheduling, energy monitoring, sensor-based lighting control and asset management. In many cases these systems are installed in existing buildings, in which cases a wireless network is preferred to avoid having to deploy new cables (for lighting control) through the ceiling. Examples of such wireless network protocols which are used widely in current practice are open standards like Zigbee, Thread, BLE, BLE mesh, Wi-Fi, Wi-Fi direct, and various proprietary network implementations built on top of the IEEE 802.15.4, IEEE 802.15.1 or IEEE 802.11 standards.

Zigbee, Thread and Bluetooth Mesh are examples of wireless networks that are targeted at IoT applications. They provide a low latency, low-rate service that enables messages to be passed between, for example, a light switch and one or more luminaires. Mesh networking provides great flexibility and scalability to the system. However, when there is a problem detected in such a network, common repair mechanisms are based on broadcasts. In smaller networks this works fine. In larger networks, a broadcast results in quite a few messages as the number of messages needed for broadcasting scale linearly with the network size. In many cases the flood of messages can even aggravate the original problem.

An end device, such as a Zigbee end-device, communicates through a parent node or a proxy node, but sometimes an end-device may lose its connection to the proxy node, for example, when the proxy node is powered down. It can also occur due to interference, or simply because so many messages are sent in the network such that messages from the end-device does not reach the parent or proxy node. To search for a new proxy, a typical procedure is to send out a beacon request. All routers which receive the beacon request will respond. To take a Zigbee standard as an example, since the beacon request uses 0xFFFF as its panID, this means all routers within radio range on the same channel will respond. Note that in an apartment building this will include router devices in networks from neighbours on the same channel (and most systems only use the four primary Zigbee channels). When the connection to the parent was lost due to a lot of traffic in the network, the beacon request to find a new parent will add many new messages to an already overloaded network. This can even result in other end-devices losing their connection to the parent or proxy nodes, resulting in a cascade effect.

US2016212010A1 relates to a node device that is connectible to a mesh network. The node device includes a selector, an establisher, a communicating unit, and a reselector. The selector selects a node serving as a connection-destination candidate node from among neighboring nodes. The establisher establishes a security association with the node selected by the selector. The communicating unit receives a connection-destination candidate node list via the node with which the establisher establishes the security association. The reselector newly selects a connection-destination node based on the connection-destination candidate node list received by the communicating unit.

US2006274671A1 relates to methods and devices for operating a wireless network including redundant communication, where redundantly connected nodes are discussed, including addressing methods and methods of creating groups for such redundant communication.

### SUMMARY OF THE INVENTION

In the distributed network, some nodes are end nodes or leaf nodes, which rely on other nodes (proxy node, router nodes or parent nodes) to relay messages to them. One problem may arise when those end nodes and/or leaf nodes lost the connection to the distributed network, a procedure for finding a new parent or a new proxy may result in significant additional traffic to the network. The problem becomes even worse when the network scales up and/or the nodes are deployed with a high density.

In view of the above, the present disclosure is directed to methods and apparatus for providing a mechanism related to efficient substitute parent or proxy finding. An end node or leaf node prepares and maintains a list of candidate substitute proxies for use, instead of initiating a new procedure after the connection to the proxy or parent node is already lost. More particularly, the goal of this invention is achieved by a method as claimed in claim 1, and by a node as claimed in claim 11.

In accordance with a first aspect of the invention a method of a node for selecting a substitute proxy to replace a present proxy in a wireless communication network is provided. The node gets connected to the wireless communication network via the present proxy, and the method comprises the steps of the node:
- generating a list of one or more candidate substitute proxies with the list sorted in an initial order;
- polling a neighbor table of the present proxy for entries related to the one or more candidate substitute proxies;
- maintaining the list of the one or more candidate substitute proxies based on a feedback from the present proxy; and
- selecting a substitute proxy from the list of one or more candidate substitute proxies to replace the present proxy, when a link quality between the node and the present proxy degrades below a certain threshold;
wherein the one or more candidate substitute proxies are sorted to be selected as the substitute proxy based on both the feedback from the present proxy and the initial order in which the list was generated.

Note that the certain threshold regarding the link quality may be an application dependent parameter. For example, depending on the data rate to be supported, the node may accept a different link quality level. The higher the required date rate, the more stringent the link quality requirement.

The node may be an end node or a leaf node, which communicates only through its parent node or proxy node and cannot relay messages intended for other nodes. When the link quality between the node and the present proxy degrades below a certain threshold or the link is even lost completely, it is important that the node can find a substitute proxy as quick as possible to get connected to the wireless network again. Therefore, it is proposed that the node shall prepare in advance a list of substitute proxies. And then, in case of the present proxy shall be replaced, the node can quickly try to connect to a new proxy node selected from the list.

It is thus also necessary to keep the list of substitute proxies up to date, namely adaptive to any change to the topology around the node. End devices that do not have tight power consumption requirements may choose to have their radios always on. Then such nodes may be able to overhear other traffic on the network and get updated about any change to the surrounding topology. However, for most battery operated devices, it is desirable to turn off the radio when they are idle. This also means that they will not be able to overhear other traffic on the network and get updated about any change to the topology. Therefore, it is proposed that the node makes use of a neighboring table of its present proxy or parent node to update its own list of substitute proxies, assuming that the neighboring information is refreshed frequently by the proxy node or parent node. For example, a neighbour table entry may be updated every time the proxy node or parent node receives any frame from a corresponding neighbor.

This is especially beneficial when the network is deployed with a high density of node. And then, since the present proxy is in the vicinity of the node, it is of a high chance that at least some of the substitute proxies for the node also appear in the neighbor table of the present proxy.

The polling may be sent separately or may be combined with a regular packet sent by the node to the present proxy.

The entire procedure may be triggered when the node is deployed in a network or when it is disconnected from a present proxy node or parent node.

Beneficially, the method further comprises the step of:
- sending a beacon request; and
- receiving one or more beacon responses;
wherein the list of one or more candidate substitute proxies is generated based on the one or more beacon responses.

As one option, the initial list of candidate substitute proxies is generated based on a detection procedure of the node itself. For example, the node first sends a beacon request, and then based on responses from its neighbours to the beacon request, the node may create such a list based on certain selection criteria, such as a received signal strength indicator (RSSI) of the response.

The detection procedure may be carried out by the node after joining the wireless communication network, or when it loses its connection to the present proxy, or when it fails to re-connect to a substitute candidate proxy.

Alternatively, the initial list of the one or more candidate substitute proxies may be generated based on an input from the outside, such as an instruction received from a commissioning device, or a configuration command received from the application layer.

In a further option, the node may get connected with a proxy node or a parent node first, and the initial list is generated by reading the neighboring table of the proxy node or parent node.

Preferably, the method further comprises a step of sending a request, such as a re-join request, to the selected substitute proxy for establishing a new connection to the wireless communication network. If it is not successful, the node may select another substitute proxy from the candidate list (the list comprising one or more candidate substitute proxies) and send the request again. If it is still not successful, the node may continue this procedure by looping to a further substitute proxy on the list. The node may also re-start the entire procedure by:
- sending a beacon request;
- selecting a proxy based on the beacon responses; and
- generating a new candidate list that comprises the identifiers of the senders of a subset or all the beacon responses received, except the one already selected as present proxy.

Advantageously, the method further comprises the step of storing the list of one or more candidate substitute proxies in a non-volatile memory.

Non-volatile memory (NVM) or non-volatile storage is a type of memory that can retain stored information even after power is removed. In contrast, volatile memory needs constant power to retain data.

For nodes that are battery powered or even powered by energy harvesting, it may happen that the nodes are powered down when they are idle. In order to maintain the candidate list for this type of nodes, it is thus beneficial to store the candidate list in a non-volatile memory.

Beneficially, the one or more candidate substitute proxies are sorted to be selected as the substitute proxy based on both the feedback from the present proxy and the initial order in which the list was generated.

Since the initial order of the candidate list may be determined according to the link performance between the node and its neighbours estimated by the node itself, such as based on a received signal to noise ratio indicator (RSSI) of the beacon responses. Thus, the initial order may represent a more accurate topology scenario at that moment.

The feedback from the present proxy reflects the neighboring information centered by the present proxy. Although the node and the present proxy are also in vicinity, the neighboring information comprised in the feedback still includes an offset resulted from the distance between the node and the present proxy. However, since the present proxy updates its neighboring information much more frequently, it can well reflect topology changes over time.

Therefore, it is considered beneficial to combine the information from the feedback and the initial order to determine the most favourable substitute proxy.

In one example, the present proxy's neighbor table is polled to verify one or more link quality indications related to the one or more candidate substitute proxies.

The present proxy's neighbor table may be polled simply to check if a candidate substitute proxy is on the neighbor table of the present proxy. It may also be beneficial to get more information related to that entry in the neighbor table, such as checking a link quality indication between the present proxy and the candidate substitute proxy. A further parameter may also be queried, as disclosed below.

Beneficially, the substitute proxy is selected based on one or more parameters out of:
- a link quality parameter between the node and the substitute proxy;
- a link quality parameter between the present proxy and the substitute proxy;
- a link cost parameter between the node and the substitute proxy;
- a link cost parameter between the present proxy and the substitute proxy;
- a reliability performance between the node and the substitute proxy;
- a reliability performance between the present proxy and the substitute proxy;
- an application requirement;
- a history of using the substitute proxy by the node as a proxy in the past.

The link quality parameter may be defined in different manners. For example, the link quality indicator (LQI) can be used an indication of the quality of the data packets received by the receiver. The received signal strength (RSS) can be used as a measure of the signal quality. The RSS is a measure of the total energy of the received signal. The ratio of the desired signal energy to the total in-band noise energy (the signal-to-noise ratio, or SNR) is another way to judge the signal quality. Therefore, the link quality parameter may be one of LQI, RSS, or SNR.

The reliability performance between the node and the substitute proxy may be estimated by a historical successful rate that the node receives a response from that substitute proxy, or the node establishes a child-parent connection with that substitute proxy.

The reliability performance between the present proxy and the substitute proxy may be estimated by considering the number of times that the substitute parent is present in the feedback.

The reliability performance between the node and the substitute proxy may be estimated according to a time duration since the last time that the substitute parent is detected by the node.

The application requirement may further specify a certain type of proxy, or a minimum date rate is required. Correspondingly, such requirement can be translated to further criteria in determining the priority in selecting a substitute proxy.

Similarly, the initial order of the candidate list may be determined by the node in an order according to:
- a link quality parameter between the node and the substitute proxy;
- a link cost parameter between the node and the substitute proxy;
- a reliability performance between the node and the substitute proxy;
- an application requirement;
- a history of using the substitute proxy by the node as a proxy in the past.

Advantageously, the feedback from the present proxy comprises a subset of the content of the neighbor table.

To reduce the communication overhead, it is encouraged to include only relevant information in the feedback, instead of the entire neighbor table or all the entries in the neighbor table related to the one or more candidate substitute proxies. For example, in the feedback the present proxy may only send information on an address and a link cost parameter related to each single candidate substitute proxy.

In one embodiment, the step of polling the present proxy's neighbor table is carried out periodically.

In this option, the polling may be scheduled according to a regular time interval. The time interval may be set according to a power budget of the node, a stability of the link between the node and the present proxy, an application requirement, or another parameter. For example, if a relatively demanding requirement on reliability of the connection between the node and the wireless network is set, such as for a time-critical application, it is preferred to set the time interval shorter to get more frequent update on any change with the topology of the network. In a further example, the node may also adjust the time interval adaptive to a remaining battery power level, a request from an application, or a change on the stability of the link between the node and the present proxy.

In another embodiment, the step of polling the present proxy's neighbor table is carried out based on a trigger event.

The trigger event may be a button press, a motion event, or a control command. As compared to a periodic polling, such trigger-based polling provides lower latency, especially because such button presses, motion events, or control commands take place sporadically without a fixed rhythm.

Beneficially, each one of the one or more candidate substitute proxies is identified by a unique identifier in the list.

Advantageously, the unique identifier is either a network address, a Medium Access Control, MAC, address, or an IP address of a candidate substitute proxy.

The network address, sometimes also called NwkAddr, short address, or node address, is typically a 16-bit number used to uniquely identify a particular node on the network. The network address is typically assigned to the node when it joins the network.

A media access control address (MAC address) is a unique identifier typically assigned by the device manufactures and is therefore often referred to as the burned-in address, or as an Ethernet hardware address, hardware address, or physical address. According to a BLE standard, the IEEE 802 MAC addresses comprise 48-bit address space. According to a Zigbee standard, the MAC address, also called IEEE address, long address, or extended address, is a 64-bit number that uniquely identifies this device from all other ZigBee devices in the world.

For a node in the wireless network, the MAC address is usually mapped to the network address, but both may be used in different occasions in parallel.

In another option, nodes may be addressed by Internet Protocol address (IP address). An IP address serves two main functions: network interface identification and location addressing. Internet Protocol version 4 (IPv4) defines an IP address as a 32-bit number, while a later version Internet Protocol version 6 (IPv6) defines an IP address of 128 bits.

Preferably, the wireless communication network is according to one of a Zigbee standard, a Thread standard, or a BLE standard.

Zigbee standard is widely adopted in home automation and lighting control applications. The Zigbee network layer natively supports both star and tree networks, and generic mesh networking. The powerful topology control provides it great flexibility in a control system, especially for reaching destination nodes that are far away from a source node with direct link.

ZigBee specifies three different device types: the ZigBee Coordinator (ZC), the ZigBee Router (ZR), and the ZigBee End Device (ZED). These three devices play different roles in a ZigBee network. A Zigbee Router (ZR) passes data between devices and/or the coordinator. A Zigbee End Device (ZED) provides only basic functionality. ZEDs are leaf nodes. They communicate only through their parent nodes and, unlike router devices, cannot relay messages intended for other nodes. They don't participate in any routing. End devices rely on their parent routers to send and receive messages. Regarding IEEE 802.15.4, ZC and ZR are fully functional devices (FFDs), whereas the ZEDs are reduced function devices (RFDs).

Thread is an IPv6-based low power mesh networking technology. Thread uses IEEE802.15.4 wireless protocol with mesh communication, as does a Zigbee system. The difference is that Thread is IP-addressable, with cloud access.

In accordance with a second aspect of the invention a node is provided. A node is configured to get connected in a wireless communication network via a present proxy. The node comprises:
- a controller configured to generate a list of one or more candidate substitute proxies with the list sorted in an initial order; and
- a radio configured to poll the present proxy's neighbor table for entries related to the one or more candidate substitute proxies and to receive a feedback from the present proxy;

wherein the controller is further configured to maintain the list of the one or more candidate substitute proxies based on the feedback from the present proxy; and to select a substitute proxy from the list of one or more candidate substitute proxies to replace the present proxy, when a link quality between the node and the present proxy degrades below a certain threshold;
wherein the one or more candidate substitute proxies are sorted to be selected as the substitute proxy based on both the feedback from the present proxy and the initial order in which the list was generated.

The controller or processor may comprise a conventional microprocessor, an application specific integrated circuit (ASIC), or a field-programmable gate array (FPGA).

The node may be battery powered or even powered by energy harvesting, and then the node may power down the controller and/or the radio when it is idle.

Advantageously, the radio is further configured to send a beacon request; and to receive one or more beacon responses; wherein the list of one or more candidate substitute proxies is generated based on the one or more beacon responses.

The initial candidate list may be generated by the node via a discovery procedure by sending a beacon request and receiving one or more beacon responses. The initial candidate list may also be generated based on an input from the outside, such as an instruction received from a commissioning device, or a configuration command received from the application layer.

Beneficially, the controller is further configured to sort the one or more candidate substitute proxies for selecting the substitute proxy based on both the feedback from the present proxy and the initial order in which the list was generated.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
FIG. 1 shows an example of a wireless communication network;
FIG. 2 shows a flow-chart of a method according to the present invention; and
FIG. 3 shows a flow-chart of another example of the method according to the present invention.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein.

For smart building, smart industry, smart home, or smart lighting control, mesh networking provides great flexibility and scalability to the system. However, when there is a problem detected in such a network, common repair mechanisms are based on broadcasts. In smaller networks this works fine. In larger networks, a broadcast results in quite a few messages as the number of messages needed for broadcasting scale linearly with the network size. In many cases the flood of messages can even aggravate the original problem.

In the distributed network, some nodes are end nodes or leaf nodes, which rely on other nodes (proxy node, router nodes or parent nodes) to relay messages to them. One problem may arise when those end nodes and/or leaf nodes lost the connection to the distributed network, a procedure for finding a new parent or a new proxy may result in significant additional traffic to the network. To take a Zigbee network as an example, a Zigbee end-device communicates through its parent, but an end-device can lose its connection to the parent, for example, when the parent is powered down. It can also occur due to interference, or simply because so many messages are sent in the network that messages from the end-device does not reach the parent. To search for a new parent, the Zigbee procedure is to send out a beacon request. All routers which receive the beacon request will respond. Since the beacon request uses 0xFFFF as its panID, this means all routers within radio range on the same channel will respond. Note that in an apartment building this will include router devices in networks from neighbours on the same channel (and most systems only use the four primary Zigbee channels). When the connection to the parent was lost due to a lot of traffic in the network, it is clear that the beacon request to find a new parent will add many new messages to an already overloaded network. This can even result in other end-devices losing their parent connection, resulting in a cascade effect.

Therefore, it is important to provide a mechanism to make the end device be able to find a new proxy more efficiently without introducing lots of traffic to the network.

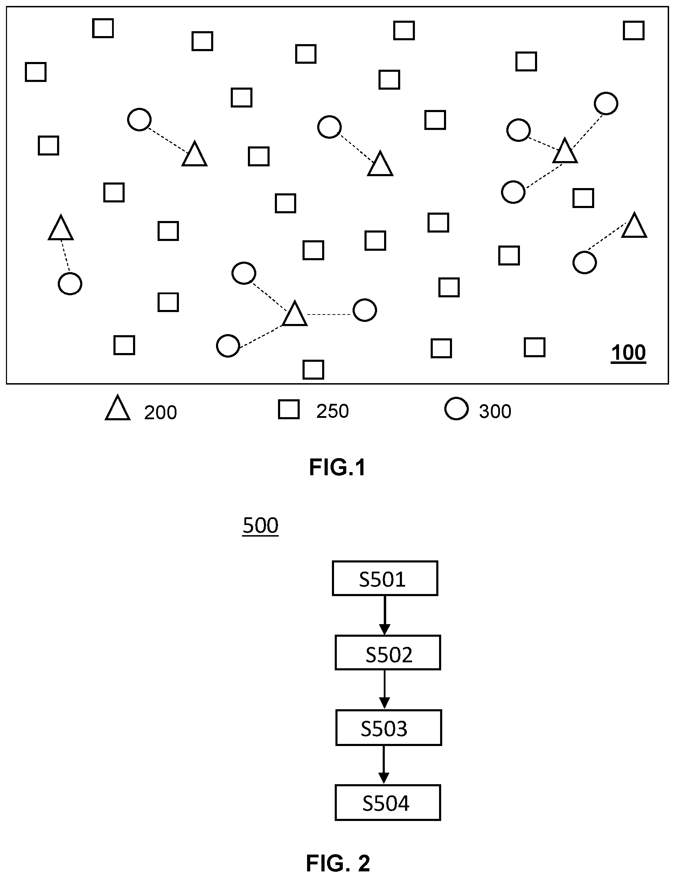

Fig. 1 shows an example of a wireless communication network 100. The wireless communication network 100 may be according to a Zigbee standard, a Thread standard, or a BLE standard. The wireless communication network 100 comprises a plurality of devices forming a mesh network. Depending on a physical property of an individual device, they may take a different role in the network. For example, in a Zigbee network, the devices can be act on one out of three roles: the ZigBee Coordinator (ZC), the ZigBee Router (ZR), and the ZigBee End Device (ZED). A Zigbee Router (ZR) passes data between devices and/or the coordinator. A Zigbee End Device (ZED) provides only basic functionality. ZEDs are leaf nodes. They communicate only through their parent nodes and, unlike router devices, cannot relay messages intended for other nodes. They don't participate in any routing. End devices rely on their parent routers to send and receive messages. Regarding IEEE 802.15.4, ZC and ZR are fully functional devices (FFDs), whereas the ZEDs are reduced function devices (RFDs).

As shown in Fig. 1, the nodes 300 are a kind of end nodes or leaf nodes, which rely on other nodes (proxy node, router nodes or parent nodes 200, 250) to relay messages to them. The binding between a node 300 and its present proxy or parent is illustrated by a dash line. It can be seen from the figure that depending on the density of the deployment of devices in the wireless communication network 100, each end node or leaf node 300 may be surrounded by more than one device 200, 250 that is capable to act as a proxy or parent for it.

Conventionally, when a node 300 loses its connection to its proxy or parent node 200, it will initiate a new discovery procedure by sending a beacon request. To reduce the chance of sending a beacon request, it is disclosed in the present invention that the end-device 300 will maintain a list of substitute parents 250. When the end-device 300 loses the connection to its parent 200, it can select one of the substitute parents 250. Instead of sending a beacon request, it sends a re-join request directly to a substitute parent 250. In case this substitute parent 250 does not send a re-join response (e.g., because it is off-line or has a full child table), the end device 300 selects the next on its list of candidate substitute parents and tries again. This procedure is repeated until either a successful re-join is achieved, or the end of the candidate list is reached, or the node 300 decides not to loop through the entire candidate list, after which a normal beacon request is sent out.

Typically, when an end device 300 first joins a network, it sends beacon requests. From this beacon requests a suitable parent 200 is selected. When multiple suitable beacon responses are received, it is proposed to store a list of potential substitute parents or proxies (preferably in persistent storage to survive a device reboot or power down).

When the connection to the parent 200 is lost, (for example, because the user powered it down), a substitute parent 250 is selected. To find substitute parents 250 the link cost is used to select candidate proxies which are nearby. Since networks can change over time, or the user may have powered down one or more of the substitute parents too, it may be an option to monitor the Link Quality Indicators (LQI) or another parameter representing the topology information. The end-device may poll its parent's neighbor table to verify availability and LQI of the candidate substitute parents. The polling may be carried out periodically, such as at a relatively low frequency, but it may also be triggered by an event, such as after a button press or motion event. As one example, when the user presses a button on the switch end-device, the message to control the light is sent first, and subsequently the parent's neighbor table is read. Since the regular Zigbee mgmt-lqi messages require up to 13 reads to obtain the full neighbor table, it is beneficial to implement a vendor specific version of the neighbor table reads. By just returning a subset of the neighbor table, such as only information related to network address and link cost, a full 26 entry neighbor table may fit in a single message, which further reduce the communication overhead.

The selection of a suitable substitute parent may depend on the link cost, the last time the substitute parent was seen, or the amount of times a substitute parent was not detected (i.e., powered down). This has an additional benefit, because selecting a more suitable parent will also reduce the chance of connection problems in the future. When a new parent or proxy node is selected, the end-device can join it by sending a (secure) re-join request, thus avoiding the need to send beacon requests.

As an additional improvement, the substitute parent availability can be sent to a gateway device. For example, using a manufacturer specific attribute or a standard specific attribute reporting mechanism, such as Zigbee attribute reporting mechanism. This way the gateway can monitor if end-devices have proper parent connections and a sufficient number of available alternatives. The list of substitute parents may also be updated in case the end-device receives beacon responses at other occasions than upon network joining.

The node 300 of the present invention may be embedded in, coupled to, or connected to another electronic component or device, used for smart building control, smart home, smart industry, smart lighting control, or another IoT application. As an example, the electronic component or device may be a light switch, a thermostat, an electricity meter, a remote controller, or another device connected to a wireless network. Note that this list is non-limiting, and the electronic component or device may be another device used in a similar or related context.

Fig. 2 shows a flow-chart of a method 500 of a node 300 for selecting a substitute proxy 250 to replace a present proxy 200 in a wireless communication network 100. The node 300 gets connected to the wireless communication network 100 via the present proxy 200. The method 500 comprises the steps of the node 300:
- generating, in step S501, a list of one or more candidate substitute proxies;
- polling, in step S502, a neighbor table of the present proxy 200 for entries related to the one or more candidate substitute proxies;
- maintaining, in step S503, the list of the one or more candidate substitute proxies based on a feedback from the present proxy 200; and
- selecting, in step S504, a substitute proxy 250 from the list of one or more candidate substitute proxies to replace the present proxy 200, when a link quality between the node 300 and the present proxy 200 degrades below a certain threshold.

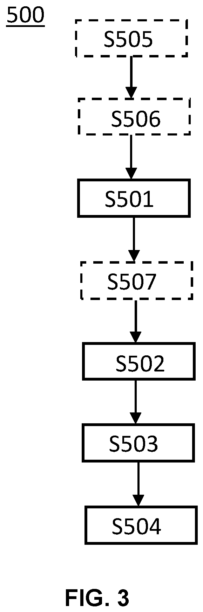

Fig. 3 shows a flow-chart of another example of the method 500 according to the present invention. In addition to the basic steps as shown in Fig. 2, the method 500 may comprise further optional steps as indicated in Fig. 3 by blocks with dash lines. The method 500 may further comprises the node 300:
- sending, in step S505, a beacon request; and
- receiving, in step S506, one or more beacon responses;
and the list of one or more candidate substitute proxies is generated based on the one or more beacon responses.

The method according to the present invention may be implemented on a computer as a computer implemented method, or in dedicated hardware, or in a combination of both.

## Claims

1. A method (500) of a node (300) for selecting a substitute proxy (250) to replace a present proxy (200) in a wireless communication network (100), wherein the node (300) gets connected to the wireless communication network (100) via the present proxy (200), the method (500) comprising the steps of the node (300):
- generating (S501) a list of one or more candidate substitute proxies with the list sorted in an initial order;
- polling (S502) a neighbor table of the present proxy (200) for entries related to the one or more candidate substitute proxies;
- maintaining (S503) the list of the one or more candidate substitute proxies based on a feedback from the present proxy (200); and
- selecting (S504) a substitute proxy (250) from the list of one or more candidate substitute proxies to replace the present proxy (200), when a link quality between the node (300) and the present proxy (200) degrades below a certain threshold;
wherein the one or more candidate substitute proxies are sorted to be selected as the substitute proxy (250) based on both the feedback from the present proxy (200) and the initial order in which the list was generated;
wherein the method (500) further comprising the node (300):
- sending (S505) a beacon request; and
- receiving (S506) one or more beacon responses;
wherein the list of one or more candidate substitute proxies is generated based on the one or more beacon responses.

2. The method (500) of claim 1, the method (500) further comprising:
- storing (S507) the list of one or more candidate substitute proxies in a non-volatile memory (330).

3. The method (500) of any one of previous claims, wherein the present proxy (200)'s neighbor table is polled to verify one or more link quality indications related to the one or more candidate substitute proxies.

4. The method (500) of any one of previous claims, wherein the substitute proxy (250) is selected based on one or more parameters out of:
• a link quality parameter between the present proxy (200) and the substitute proxy (250);
• a link cost parameter between the node (300) and the substitute proxy (250);
• a link cost parameter between the present proxy (200) and the substitute proxy (250);
• a reliability performance between the node (300) and the substitute proxy (250);
• a reliability performance between the present proxy (200) and the substitute proxy (250);
• an application requirement;
• a history of using the substitute proxy (250) by the node (300) as a proxy in the past.

5. The method (500) of any one of previous claims, wherein the feedback from the present proxy (200) comprises a subset of the content of the neighbor table.

6. The method (500) of any one of previous claims 1-5, wherein the step of polling the present proxy (200)'s neighbor table is carried out periodically.

7. The method (500) of any one of previous claims 1-5, wherein the step of polling the present proxy (200)'s neighbor table is carried out based on a trigger event.

8. The method (500) of any one of previous claims, wherein each one of the one or more candidate substitute proxies is identified by a unique identifier in the list.

9. The method (500) of claim 8, wherein the unique identifier is either a short network (100) address or a Medium Access Control, MAC, address of a candidate substitute proxy (250).

10. The method (500) of any one of previous claims, wherein the wireless communication network (100) is according to one of a Zigbee standard, a Thread standard, or a BLE standard.

11. A node (300) configured to get connected in a wireless communication network (100) via a present proxy (200), the node (300) comprising:
- a controller (310) configured to generate a list of one or more candidate substitute proxies with the list sorted in an initial order; and
- a radio (320) configured to poll the present proxy (200)'s neighbor table for entries related to the one or more candidate substitute proxies and to receive a feedback from the present proxy (200);
wherein the controller is further configured to maintain the list of the one or more candidate substitute proxies based on the feedback from the present proxy (200); and to select a substitute proxy (250) from the list of one or more candidate substitute proxies to replace the present proxy (200), when a link quality between the node (300) and the present proxy (200) degrades below a certain threshold;
wherein the controller is further configured to sort the one or more candidate substitute proxies for selecting the substitute proxy (250) based on both the feedback from the present proxy (200) and the initial order in which the list was generated;
wherein the radio is further configured to send a beacon request; and to receive one or more beacon responses; and the controller is configured to generate the list of one or more candidate substitute proxies based on the one or more beacon responses.

## Patentansprüche

1. Verfahren (500) eines Knotens (300) zum Auswählen eines Ersatz-Proxys (250) zum Ersetzen eines gegenwärtigen Proxys (200) in einem drahtlosen Kommunikationsnetz (100), wobei der Knoten (300) über den gegenwärtigen Proxy (200) mit dem drahtlosen Kommunikationsnetz (100) verbunden wird, wobei das Verfahren (500) die Schritte des Knotens (300) umfasst:
- Erzeugen (S501) einer Liste von einem oder mehreren in Frage kommenden Ersatz-Proxy(s), wobei die Liste in einer anfänglichen Reihenfolge sortiert ist;
- Abfragen (S502) einer Nachbartabelle des gegenwärtigen Proxys (200) nach Einträgen, die sich auf den einen oder die mehreren in Frage kommenden Ersatz-Proxy(s) beziehen;
- Pflegen (S503) der Liste des einen oder der mehreren in Frage kommenden Ersatz-Proxy(s) basierend auf einer Rückmeldung von dem gegenwärtigen Proxy (200) und
- Auswählen (S504) eines Ersatz-Proxys (250) aus der Liste von einem oder mehreren in Frage kommenden Ersatz-Proxy(s), um den gegenwärtigen Proxy (200) zu ersetzen, wenn eine Verbindungsqualität zwischen dem Knoten (300) und dem gegenwärtigen Proxy (200) unter einen bestimmten Schwellenwert abfällt;
wobei der eine oder die mehreren in Frage kommenden Ersatz-Proxy(s) sortiert wird/werden, um basierend sowohl auf der Rückmeldung von dem gegenwärtigen Proxy (200) als auch auf der anfänglichen Reihenfolge, in der die Liste erzeugt wurde, als der Ersatz-Proxy (250) ausgewählt zu werden;
wobei das Verfahren (500) ferner umfasst, durch den Knoten (300):
- Senden (S505) einer Beacon-Anforderung und
- Empfangen (S506) einer oder mehrerer Beacon-Antwort(en);
wobei die Liste von einem oder mehreren in Frage kommenden Ersatz-Proxy(s) basierend auf der einen oder den mehreren Beacon-Antwort(en) erzeugt wird.

2. Verfahren (500) nach Anspruch 1, wobei das Verfahren (500) ferner umfasst:
- Speichern (S507) der Liste von einem oder mehreren in Frage kommenden Ersatz-Proxy(s) in einem nichtflüchtigen Speicher (330).

3. Verfahren (500) nach einem der vorstehenden Ansprüche, wobei die Nachbartabelle des gegenwärtigen Proxys (200) abgefragt wird, um eine oder mehrere Verbindungsqualitätsangabe(n), die sich auf den einen oder die mehreren in Frage kommenden Ersatzproxy(s) bezieht/beziehen, zu verifizieren.

4. Verfahren (500) nach einem der vorstehenden Ansprüche, wobei der Ersatz-Proxy (250) ausgewählt wird basierend auf einem oder mehreren Parameter(n) aus:
• einem Verbindungsqualitätsparameter zwischen dem gegenwärtigen Proxy (200) und dem Ersatz-Proxy (250);
• einem Verbindungskostenparameter zwischen dem Knoten (300) und dem Ersatz-Proxy (250);
• einem Verbindungskostenparameter zwischen dem gegenwärtigen Proxy (200) und dem Ersatz-Proxy (250);
• einer Zuverlässigkeitsleistung zwischen dem Knoten (300) und dem Ersatz-Proxy (250);
• einer Zuverlässigkeitsleistung zwischen dem gegenwärtigen Proxy (200) und dem Ersatz-Proxy (250);
• einer Anwendungsanforderung;
• einer Historie des Verwendens des Ersatz-Proxys (250) durch den Knoten (300) als Proxy in der Vergangenheit.

5. Verfahren (500) nach einem der vorstehenden Ansprüche, wobei die Rückmeldung von dem gegenwärtigen Proxy (200) eine Teilmenge des Inhalts der Nachbartabelle umfasst.

6. Verfahren (500) nach einem der vorstehenden Ansprüche 1 bis 5, wobei der Schritt des Abfragens der Nachbartabelle des gegenwärtigen Proxys (200) periodisch ausgeführt wird.

7. Verfahren (500) nach einem der vorstehenden Ansprüche 1 bis 5, wobei der Schritt des Abfragens der Nachbartabelle des gegenwärtigen Proxys (200) basierend auf einem Auslöserereignis durchgeführt wird.

8. Verfahren (500) nach einem der vorstehenden Ansprüche, wobei jeder von dem einen oder den mehreren in Frage kommenden Ersatz-Proxy(s) durch eine eindeutige Kennung in der Liste identifiziert wird.

9. Verfahren (500) nach Anspruch 8, wobei die eindeutige Kennung entweder eine kurze Adresse des Netzes (100) oder eine Medium-Access-Control-Adresse, MAC-Adresse, eines in Frage kommenden Ersatz-Proxys (250) ist.

10. Verfahren (500) nach einem der vorstehenden Ansprüche, wobei das drahtlose Kommunikationsnetz (100) einem von einem Zigbee-Standard, einem Thread-Standard oder einem BLE-Standard entspricht.

11. Knoten (300), der konfiguriert ist, um in einem drahtlosen Kommunikationsnetz (100) über einen gegenwärtigen Proxy (200) verbunden zu werden, wobei der Knoten (300) umfasst:
- eine Steuerung (310), die konfiguriert ist, um eine Liste von einem oder mehreren in Frage kommenden Ersatz-Proxy(s) zu erzeugen, wobei die Liste in einer anfänglichen Reihenfolge sortiert ist; und
- eine Funkeinrichtung (320), die konfiguriert ist, um die Nachbartabelle des gegenwärtigen Proxys (200) nach Einträgen abzufragen, die sich auf den einen oder die mehreren in Frage kommenden Ersatz-Proxy(s) beziehen, und eine Rückmeldung von dem gegenwärtigen Proxy (200) zu empfangen;
wobei die Steuerung ferner konfiguriert ist, um die Liste des einen oder der mehreren in Frage kommenden Ersatz-Proxy(s) basierend auf der Rückmeldung von dem gegenwärtigen Proxy (200) zu pflegen und einen Ersatz-Proxy (250) aus der Liste von einem oder mehreren in Frage kommenden Ersatz-Proxy(s) auszuwählen, um den gegenwärtigen Proxy (200) zu ersetzen, wenn eine Verbindungsqualität zwischen dem Knoten (300) und dem gegenwärtigen Proxy (200) unter einen bestimmten Schwellenwert abfällt;
wobei die Steuerung ferner konfiguriert ist, um den einen oder die mehreren in Frage kommenden Ersatz-Proxy(s) zum Auswählen des Ersatz-Proxys (250) basierend sowohl auf der Rückmeldung von dem gegenwärtigen Proxy (200) als auch auf der anfänglichen Reihenfolge, in der die Liste erzeugt wurde, zu sortieren;
wobei die Funkeinrichtung ferner konfiguriert ist, um eine Beacon-Anforderung zu senden und eine oder mehrere Beacon-Antwort(en) zu empfangen; und die Steuerung konfiguriert ist, um die Liste von einem oder mehreren in Frage kommenden Ersatz-Proxy(s) basierend auf der einen oder den mehreren Beacon-Antwort(en) zu erzeugen.

## Revendications

1. Procédé (500) d'un nœud (300) permettant de sélectionner un mandataire de substitution (250) pour remplacer un mandataire actuel (200) dans un réseau de communication sans fil (100), dans lequel le nœud (300) se connecte au réseau de communication sans fil (100) par l'intermédiaire du mandataire actuel (200), le procédé (500) comprenant les étapes consistant pour le nœud à (300) :
- générer (S501) une liste d'un ou plusieurs mandataires de substitution candidats, la liste étant triée dans un ordre initial ;
- interroger (S502) une table de voisins du mandataire actuel (200) pour des entrées associées à la ou aux mandataires de substitution candidates ;
- maintenir (S503) la liste du ou des mandataires de substitution candidats sur la base d'un retour d'informations provenant du mandataire actuel (200) ; et
- sélectionner (S504) un mandataire de substitution (250) à partir de la liste d'un ou plusieurs mandataires de substitution candidats pour remplacer le mandataire actuel (200), lorsqu'une qualité de liaison entre le nœud (300) et le mandataire actuel (200) se dégrade en dessous d'un certain seuil ;
dans lequel le ou les mandataires de substitution candidats sont triés pour être sélectionnés en tant que mandataire de substitution (250) sur la base à la fois du retour d'informations provenant du mandataire actuel (200) et de l'ordre initial dans lequel la liste a été générée ;
dans lequel le procédé (500) comprend en outre le fait que le nœud (300) :
- envoie (S505) une demande de balise ; et
- reçoit (S506) une ou plusieurs réponses de balise ;
dans lequel la liste d'un ou plusieurs mandataires de substitution candidats est générée sur la base de la ou des réponses de balise.

2. Procédé (500) selon la revendication 1, le procédé (500) comprenant en outre :
- le stockage (S507) de la liste d'un ou plusieurs mandataires de substitution candidats dans une mémoire non volatile (330).

3. Procédé (500) selon l'une quelconque des revendications précédentes, dans lequel la table de voisins du mandataire actuel (200) est interrogée pour vérifier une ou plusieurs indications de qualité de liaison associées au ou aux mandataires de substitution candidats.

4. Procédé (500) selon l'une quelconque des revendications précédentes, dans lequel le mandataire de substitution (250) est choisi sur la base d'un ou plusieurs paramètres parmi :
• un paramètre de qualité de liaison entre le mandataire actuel (200) et le mandataire de substitution (250) ;
• un paramètre de coût de liaison entre le nœud (300) et le mandataire de substitution (250) ;
• un paramètre de coût de liaison entre le mandataire actuel (200) et le mandataire de substitution (250) ;
• une performance de fiabilité entre le nœud (300) et le mandataire de substitution (250) ;
• une performance de fiabilité entre le mandataire actuel (200) et le mandataire de substitution (250) ;
• une exigence d'application ;
• un historique d'utilisation du mandataire de substitution (250) par le nœud (300) en tant que mandataire dans le passé.

5. Procédé (500) selon l'une quelconque des revendications précédentes, dans lequel le retour d'informations provenant du mandataire actuel (200) comprend un sous-ensemble du contenu de la table de voisins.

6. Procédé (500) selon l'une quelconque des revendications précédentes 1 à 5, dans lequel l'étape consistant à interroger la table de voisins du mandataire actuel (200) est réalisée périodiquement.

7. Procédé (500) selon l'une quelconque des revendications précédentes 1 à 5, dans lequel l'étape d'interrogation de la table de voisins du mandataire actuel (200) est réalisée en fonction d'un événement déclencheur.

8. Procédé (500) selon l'une quelconque des revendications précédentes, dans lequel chacun du ou des mandataires de substitution candidats est identifié par un identifiant unique dans la liste.

9. Procédé (500) selon la revendication 8, dans lequel l'identifiant unique est soit une adresse réseau (100) courte, soit une adresse de commande d'accès au support, MAC, d'un mandataire de substitution candidat (250).

10. Procédé (500) selon l'une quelconque des revendications précédentes, dans lequel le réseau de communication sans fil (100) est conforme à l'une parmi une norme Zigbee, une norme Thread, ou une norme BLE.

11. Nœud (300) configuré pour se connecter dans un réseau de communication sans fil (100) par l'intermédiaire d'un mandataire actuel (200), le nœud (300) comprenant :
- un dispositif de commande (310) configuré pour générer une liste d'un ou plusieurs mandataires de substitution candidats, la liste étant triée dans un ordre initial ; et
- une radio (320) configurée pour interroger la table de voisins du mandataire actuel (200) pour des entrées associées au ou aux mandataires de substitution candidats et pour recevoir un retour d'informations du mandataire actuel (200) ;
dans lequel le dispositif de commande est en outre configuré pour maintenir la liste du ou des mandataires de substitution candidats sur la base du retour d'informations provenant du mandataire actuel (200) ; et pour sélectionner un mandataire de substitution (250) à partir de la liste d'un ou plusieurs mandataires de substitution candidats pour remplacer le mandataire actuel (200), lorsqu'une qualité de liaison entre le nœud (300) et le mandataire actuel (200) se dégrade en dessous d'un certain seuil ;
dans lequel le dispositif de commande est en outre configuré pour trier le ou les mandataires de substitution candidats pour la sélection du mandataire de substitution (250) sur la base à la fois du retour d'informations provenant du mandataire actuel (200) et de l'ordre initial dans lequel la liste a été générée ;
dans lequel la radio est en outre configurée pour envoyer une demande de balise ; et pour recevoir une ou plusieurs réponses de balise ; et le dispositif de commande est configuré pour générer la liste d'un ou plusieurs mandataires de substitution candidats sur la base de la ou des réponses de balise.
